# FASCICULE DE BREVET EUROPEEN

(11) **EP 4 196 898 B1**
(45) Date de publication et mention de la délivrance du brevet: **23.07.2025**
(21) Numéro de dépôt: 21759098.3
(22) Date de dépôt: 16.08.2021
(51) Int. Cl.: G06F 21/62, H04L 9/40, H04L 12/18

(54) **PROCÉDÉ DE CONNEXION À UNE VISIOCONFÉRENCE SÉCURISÉE PAR AUTHENTIFICATION FORTE**
VERFAHREN ZUR VERBINDUNG MIT EINER DURCH STARKE AUTHENTIFIZIERUNG GESICHERTEN VIDEOKONFERENZ
METHOD FOR CONNECTING TO A VIDEOCONFERENCE MADE SECURE BY STRONG AUTHENTICATION

(30) Priorité: 17.08.2020 FR 2008521
(43) Date de publication de la demande: 21.06.2023
(73) Titulaire: Canton-Consulting, 75018 Paris (FR)
(72) Inventeur: ROSSI, Jean-Yves, 75018 PARIS (FR); LUU, Duy-Tung, 75017 PARIS (FR); RENIER, Jules, 95000 CERGY (FR)
(74) Mandataire: Marconnet, Sébastien
(86) Numéro de dépôt international: PCT/EP2021/072749
(87) Numéro de publication internationale: WO 2022/038096

(56) Documents cités:
- EP-A1- 3 438 836
- US-A1- 2014 095 871
- US-A1- 2018 351 757
- US-B1- 9 635 072

## Description

La présente invention porte sur un procédé de connexion à une visio-conférence sécurisée par une authentification forte. L'invention vise à sécuriser et garantir l'identité des participants et des invités dans l'emploi d'une technologie de visio-conférence sur le web selon une architecture ouverte qui permet de dissocier les services d'identification par authentification forte, de visio-conférence et d'interconnexion entre les deux précédents.

On connaît des plateformes de visio-conférence permettant d'inviter des participants à une réunion virtuelle définie notamment par un horaire de début et de fin ainsi qu'un thème ou un agenda caractéristique. Dans le cadre de la visio-conférence, les participants peuvent alors communiquer entre eux via des moyens de communication audio et vidéo de leur terminal de connexion prenant la forme d'un ordinateur ou d'un téléphone portable de type "smartphone".

En général, un lien d'invitation unique, sous forme de lien de type URL, est envoyé à toutes les personnes conviées à la réunion. Après la sélection du lien, chaque personne peut alors se connecter à la réunion correspondante en indiquant son identité. Il n'existe en règle générale aucun contrôle sur la manière dont chaque participant pourra choisir de se définir. En conséquence, de multiples incertitudes existent sur l'identité des participants et en particulier toute personne qui intercepte le lien d'invitation peut assister à la réunion en usurpant un nom quelconque voire le nom de l'invité. Certains systèmes dotés par eux-mêmes d'une étape de connexion peuvent imposer une identification pour accéder à l'interface de web-conférence mais cette étape repose sur une identité initiale déclarative introduite à l'entrée dans le système et cette étape ne fait donc que vérifier la réitération de cette affirmation initiale, invérifiable en elle-même. La demande de brevet US2014/095871 A1 divulgue un système de visio-conférence utilisant des liens d'invitation uniques et est représentative de l'état de l'art antérieur.

Cela est problématique dans le cas où un participant n'est pas connu des autres participants, ou si un problème de caméra ou de réseau, réel ou provoqué, empêche les autres participants de voir et vérifier son visage. Les systèmes existants rendent donc également possible les fraudes ou détournements consistant à utiliser des logiciels d'intelligence artificielle très performants pour déformer le signal audio d'une voix afin de réaliser en temps réel des imitations de voix ou d'apparence de visage.

L'invention vise à remédier efficacement aux inconvénients précités en proposant un procédé de connexion sécurisé à une plateforme de visio-conférence entre plusieurs participants garantissant l'identité des participants par authentification forte et, à cette fin, articulé autour de deux phases: l'une d'organisation, l'autre de connexion:
- la phase d'organisation comportant:
   - une étape de définition de caractéristiques d'une réunion, tels qu'un horaire de début et de fin, une salle virtuelle de réunion, un thème ou un agenda, et le cas échéant des paramètres de contexte, comme par exemple le fuseau horaire, la langue d'échange, les documents supports, les conditions légales applicables à la réunion,
   - une étape de définition d'une liste de participants dont les identités sont prédéfinies, soit par référence à un répertoire existant (*convocation*) soit par initiation d'un processus d'association dans ce répertoire d'une personne nouvelle connue par divers moyens tels que son adresse mail, son téléphone, etc (enrôlement), soit en prévoyant une étape d'authentification forte préalable à l'interconnexion, par tout procédé géré par le serveur d'authentification forte à cet effet, comme un mot de passe à usage unique, pour des personnes qui n'ont pas vocation à être enregistrées dans ce répertoire (*invitation*),
   - une étape de génération, pour chaque participant à la réunion, d'un lien d'invitation complexe individuel (LICI) vers la réunion, ledit lien d'invitation complexe individuel (LICI) prenant la forme d'un jeton (ou "token" en anglais), JSON Web Token tel que défini par un rfc de l'IETF, dont une charge utile ("payload" en anglais) contient des informations relatives aux caractéristiques et le cas échéant aux paramètres de contexte de la réunion ainsi que des informations relatives à l'identité de chaque participant auquel est destiné ledit lien d'invitation complexe individuel (LICl), le jeton étant généré de façon à garantir l'intégrité des données contenues dans son entête (ou "header" en anglais) et dans sa charge utile, le tout étant signé numériquement avec une fonction de hashage choisie pour assurer un haut niveau de sécurité de l'encodage et dont une clé secrète est conservée sur un serveur d'interconnexion ou, le cas échéant, sur un serveur d'authentification distinct du serveur d'interconnexion,
   - une étape de génération à partir de ces liens d'invitation complexe individuels, d'un alias de chaque lien d'invitation complexe (ALICI) lequel alias est le produit d'une fonction de hashage apte à générer une empreinte numérique à partir du lien d'invitation complexe individuel (LICI), notamment sous forme d'une chaîne de caractères UTF-8, ladite empreinte numérique étant unique pour chaque lien d'invitation complexe (LICI), conformément aux caractéristiques de la fonction de hashage et n'offrant aucune possibilité de reconstituer le lien complexe original sans disposer d'une clé privée conservée de manière sécurisée sur le serveur d'interconnexion ou le cas échéant, le serveur d'authentification,
   - une étape d'envoi, par mail, de chaque alias de lien d'invitation complexe individuel (ALICI) au participant correspondant sous forme d'un lien hypertexte court,
   - une étape de sauvegarde ou d'envoi vers le serveur d'interconnexion ou le cas échéant vers le serveur d'authentification, d'un mécanisme de correspondance entre les alias des liens d'invitation complexes (ALICI) et les liens d'invitation complexes individuels (LICI),
- puis la phase de connexion comportant:
   - une étape dans laquelle le participant en possession du lien court l'utilise pour se connecter à un domaine correspondant, qui est un domaine hébergeant un serveur d'authentification dans le cadre d'un flux de connexion a) ou le cas échéant un serveur d'interconnexion qui utilise le serveur d'authentification comme partenaire de confiance ("Relying Party" en anglais) dans le cas d'un flux de connexion b),
   - dans le flux de connexion a), une étape dans laquelle le serveur d'authentification requiert du participant qui se connecte une authentification forte selon un procédé défini par le standard du W3C 'WebAuthn' ou tout autre procédé équivalent, un déroulement de ladite authentification étant immédiat dans le cas d'une personne connue ou bien qui passera par une phase d'enrôlement **ou** d'identification par authentification forte gérée par le serveur d'authentification, par tout procédé disponible comme l'usage d'un mot de passe à usage unique, dans le cas d'une personne invitée,
   - dans le flux de connexion b), une étape dans laquelle le serveur d'interconnexion sollicite le serveur d'authentification à l'égard de qui il est partenaire de confiance, lequel serveur d'authentification requiert du participant qui se connecte une authentification forte selon un procédé défini par le standard WebAuthn du W3C ou tout autre procédé équivalent, un déroulement de ladite authentification étant immédiat dans le cas d'un lien de convocation et dont le déroulement sera immédiat dans le cas d'une personne connue ou bien qui passera par une phase d'enrôlement ou d'identification par authentification forte gérée par le serveur d'authentification forte, par tout procédé disponible comme l'usage d'un mot de passe à usage unique, dans le cas d'une personne invitée,
   - une étape dans laquelle, si l'authentification forte échoue, le processus d'interconnexion s'interrompt, et si l'authentification est réussie, le serveur d'authentification transmet au serveur d'interconnexion l'alias de lien d'invitation complexe individuel (ALICI) reçu (flux a) ou bien (flux b) une information que l'authentification forte a bien été accomplie et que l'alias de lien d'invitation complexe individuel (ALICI) peut être traité, ledit alias de lien d'invitation complexe individuel (ALICI) reçu par l'un ou l'autre flux étant alors converti en lien d'invitation complexe individuel (LICl) correspondant et ce dernier lien permettant au serveur d'interconnexion d'introduire l'utilisateur qui a réussi le challenge d'authentification forte, déclenchant ainsi l'utilisation du jeton, contenant et révélant les caractéristiques de la réunion et le cas échéant les paramètres de contexte, pour initier la connexion du participant authentifié,
   - une étape de connexion du participant authentifié à la visio-conférence, cette connexion opérée au travers des protocoles internet standard (UDP et ou TURN) ou de tout autre protocole internet de connexion avec le navigateur du participant ainsi authentifié équivalent, s'effectuant conformément aux informations du lien d'invitation complexe individuel (LICI), notamment l'identité de la personne correspondante, transmis au serveur d'interconnexion à l'issue de l'étape d'authentification forte, laquelle est la condition absolument nécessaire de la lecture des informations du lien d'invitation complexe individuel (LICI),
   - une étape d'utilisation du terminal du participant pour participer à la visio-conférence au travers d'une couche de transport réseau sécurisée (TLS) ou de tout autre protocole équivalent assurant la transmission vers et depuis la plateforme de visio-conférence opérant selon un standard, tel qu'un standard de type WebRTC ou tout autre procédé équivalent.

Il est précisé que le terme d'authentification forte doit être interprété en référence à cette notion dans le domaine de la sécurité des systèmes d'information, "une procédure d'identification qui requiert la concaténation d'au moins deux facteurs d'authentification", (https://fr.wikipedia.org/wiki/Authentification_forte). Il sera aussi observé que la Directive 2016/866/UE donne en son article 4 la définition suivante:

*"30) «authentification forte du client», une authentification reposant sur l'utilisation de deux éléments ou plus appartenant aux catégories «connaissance» (quelque chose que seul l'utilisateur connaît), «possession» (quelque chose que seul l'utilisateur possède) et «inhérence» (quelque chose que l'utilisateur est) et indépendants en ce sens que la compromission de l'un ne remet pas en question la fiabilité des autres, et qui est conçue de manière à protéger la confidentialité des données d'authentification;"*

Comme on le voit, l'authentification forte se distingue d'une authentification ordinaire par le fait de combiner deux facteurs parmi trois: ce que l'on sait, ce que l'on possède ou ce que l'on est.

L'invention permet ainsi de garantir que seul le destinataire de l'invitation peut décrypter cette dernière et accéder à la salle de réunion à laquelle il a été invité. Lorsqu'il se connecte, chaque participant à la réunion apparaît sous le nom correspondant au lien d'invitation complexe individuel, tel que prédéfini par l'organisateur. Ce libellé de nom est, de plus, rendu inaltérable par l'utilisation de la fonction de hashage, dans la mesure où il ne peut pas être modifié par l'invité, ni recréé et usurpé par quiconque. Ainsi, tous les participants sont absolument certains de l'identité de la personne qui s'est connectée à une réunion par ce procédé.

Grâce à l'invention, l'invité, et lui seul, peut déclencher la conversion de l'alias d'invitation complexe individuel en un lien d'invitation complexe individuel (lequel est le seul révélant les caractéristiques de la réunion et permettant de s'y connecter) et le décryptage dudit jeton (ou "token") va seul permettre d'entraîner la connexion sur la salle de réunion, selon les horaire et thème définis par l'organisateur, entraînant l'entrée en conférence de la personne identifiée, affichée sous son nom, tel que ce nom a été défini par l'organisateur mais aussi dont la réalité effective est garantie par le succès de l'opération d'authentification qui est une condition nécessaire au décryptage du lien d'invitation complexe individuel.

En outre, étant donné que le procédé définit des paramètres de réunion, une liste de participants ainsi qu'une politique de sécurité, il sera possible d'alerter si plusieurs personnes ayant le même nom se connectent sous des adresses différentes, ou si des invités utilisent une connexion qui n'a pas été sécurisée ou de toute autre anomalie ou incohérence. La définition du périmètre de la réunion par l'ensemble de ces paramètres réunit ainsi les conditions nécessaires et suffisantes pour que des programmes de contrôle puissent vérifier le bon déroulement de la réunion tel que l'organisateur l'avait prévu.

Selon une mise en œuvre de l'invention, ledit procédé comporte une étape d'utilisation d'une interface logicielle pour la définition des paramètres de la réunion.

Selon une mise en œuvre de l'invention, l'interface logicielle met en œuvre des boutons de génération et d'envoi de liens courts d'invitation à destination des différents participants.

Selon une mise en œuvre de l'invention, ledit procédé comporte une étape de désignation d'un ou plusieurs modérateurs ayant la possibilité de contrôler des droits pour les différents participants, tels que le droit de parler ou le droit de partager un document ou d'enregistrer la conférence ou bien au contraire d'en interdire l'enregistrement.

Selon une mise en œuvre de l'invention, la sélection des participants et/ou une sélection d'un nom de salle est effectuée au moyen d'une liste déroulante.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
[Fig. 1] La figure 1 montre un exemple d'interface logicielle de création de réunion mis en œuvre par la présente invention permettant de définir les différents paramètres d'une réunion de visio-conférence;
[Fig. 2a] La figure 2a est un diagramme fonctionnel d'un système informatique mettant en œuvre le procédé de connexion sécurisé à une visio-conférence selon la présente invention;
[Fig. 2b] La figure 2b est un diagramme fonctionnel d'un système informatique mettant en œuvre une variante du procédé de connexion sécurisé à une visio-conférence selon la présente invention;
[Fig. 3] La figure 3 est une illustration d'une liste déroulante pouvant être utilisée dans le cadre du procédé selon l'invention pour la sélection de participants connus;
[Fig. 4] La figure 4 montre un exemple de fenêtre d'authentification pouvant être utilisée dans le cadre du procédé selon l'invention;
[Fig. 5] La figure 5 montre un exemple de fenêtre de vérification d'identité pouvant être utilisée suite à l'envoi d'un code vers une adresse email ou un numéro de téléphone d'un participant.

Il est à noter que, sur les figures, les éléments fonctionnels communs aux différents modes de réalisation présentent les mêmes références.

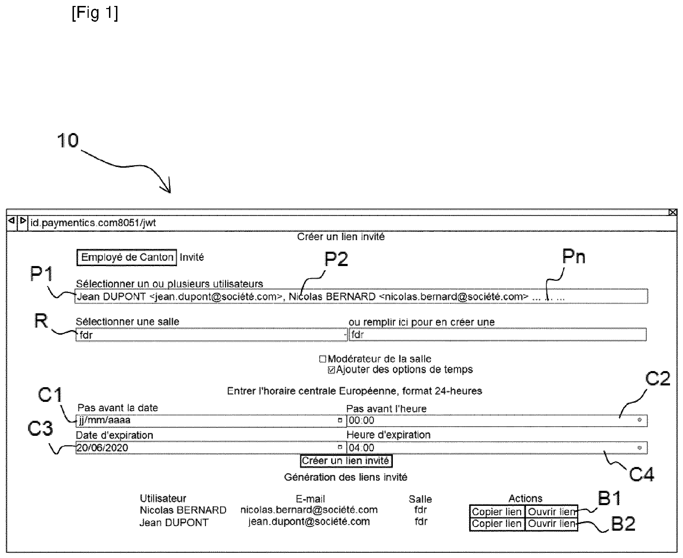

La figure 1 montre une interface logicielle 10 permettant à un organisateur de définir des caractéristiques d'une réunion, notamment un horaire, un nom de salle, un thème ou un ordre du jour et le cas échéant des paramètres de contexte tels que le nom des participants, le nom des organisateurs et modérateurs, les références d'une salle physique où la conférence sera visible et où les personnes physiquement présentes pourront se regrouper pour participer, le fuseau horaire, la langue d'échange, les documents supports, les conditions légales applicables à la réunion, etc.. Un organisateur ou un ou des modérateurs pourront assurer une gestion de salles de réunion accessibles ainsi que créer, modifier, supprimer, ou programmer chaque réunion sur laquelle il disposera de tels droits.

On définit également une liste de participants P1-Pn, I1-Im dont les identités sont prédéfinies. La liste des participants pourra être définie soit par référence à un répertoire existant dans le cadre d'une convocation pour les participants connus (P1-Pm) soit par initiation d'un processus d'association dans ce répertoire d'une personne nouvelle connue par divers moyens tels que son adresse mail, son téléphone, etc (enrôlement) ou d'identification par authentification forte gérée par le serveur d'authentification correspondant, par tout procédé disponible comme l'usage d'un mot de passe à usage unique (invitation) pour les participants de type invités (11-Im). Il est alors possible de désigner un ou plusieurs modérateurs ayant la possibilité de contrôler des droits pour les différents participants P1-Pn, I1-Im, tels que le droit de parler ou le droit de partager un document. Le ou les modérateurs pourront également contrôler le droit d'enregistrer la conférence ou bien au contraire d'en interdire l'enregistrement.

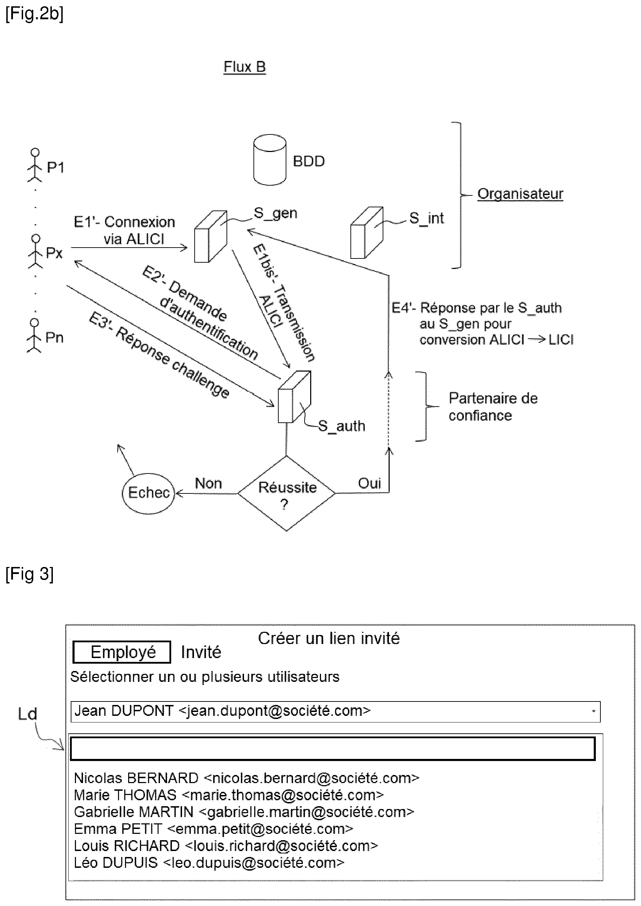

Comme cela est illustré par la figure 3, la sélection des participants P1-Pn, I1-Im pourra être effectuée au moyen d'une liste déroulante Ld. Une liste déroulante du même type pourra être utilisée pour sélectionner le nom de la salle R souhaitée. Alternativement, il est possible de créer un nouveau nom de salle R pour une réunion particulière.

Il est également possible de créer une date de début associée à une heure de début via les champs C1 et C2 et une date d'expiration associée à une heure d'expiration de la réunion via les champs C3 et C4. Ces horaires peuvent aussi être définis en référence à l'UTC et aux divers fuseaux horaires des participants P1-Pn, I1-Im.

L'organisateur pourra générer des liens d'invitations pour un participant P1-Pn, 11-Im, pour un groupe, pour un service, pour une diffusion vers le public, via l'appui sur un bouton de commande. Dans l'exemple représenté, un bouton de commande B1, B2 est associé à chaque participant P1-Pn, I1-Im mais il est possible d'ajouter un bouton de génération de liens d'invitation commun à tous les participants P1-Pn, I1-Im suite à une validation de la réunion.

Comme cela est décrit plus en détails ci-après, on pourra distinguer des participants P1-Pn, I1-Im connus du système (typiquement les employés d'une entreprise ou d'une organisation ou les clients d'une société ou d'un prestataire de services) et des participants I1-Im de type "invité" inconnus du système. Pour les participants connus P1-Pn, un niveau d'authentification élevé pourra être mise en œuvre, dans la mesure où un ou plusieurs facteurs d'authentification relatifs aux participants P1-Pn auront pu être préalablement enregistrés dans le système. Pour les participants 11-Im de type "invité", un niveau d'authentification inférieur pourra être mis en œuvre basé uniquement sur un numéro de téléphone et/ou une adresse email du participant I1-Im. Dans ce cas une forme d'authentification forte peut être obtenue par l'envoi d'un mot de passe à usage unique (OTP) par SMS, que l'utilisateur recevra lorsqu'il se connectera via son alias de lien d'invitation complexe individuel (ALICI décrit plus en détails ci-après) puis qu'il devra entrer lorsqu'il lui sera demandé pour accéder à une page d'enrôlement, établissant ainsi être bien en possession du téléphone correspondant à celui de l'invité, tel qu'il était antérieurement connu par l'invitant.

Un organisateur pourra également effectuer un suivi de réunions via la conservation et, le cas échéant, la transmission aux différents participants P1-Pn, I1-Im d'un compte-rendu de réunion. Cette transmission de compte-rendu pourra être automatisée. L'organisateur pourra également conserver un historique des comptes-rendus de réunions antérieures.

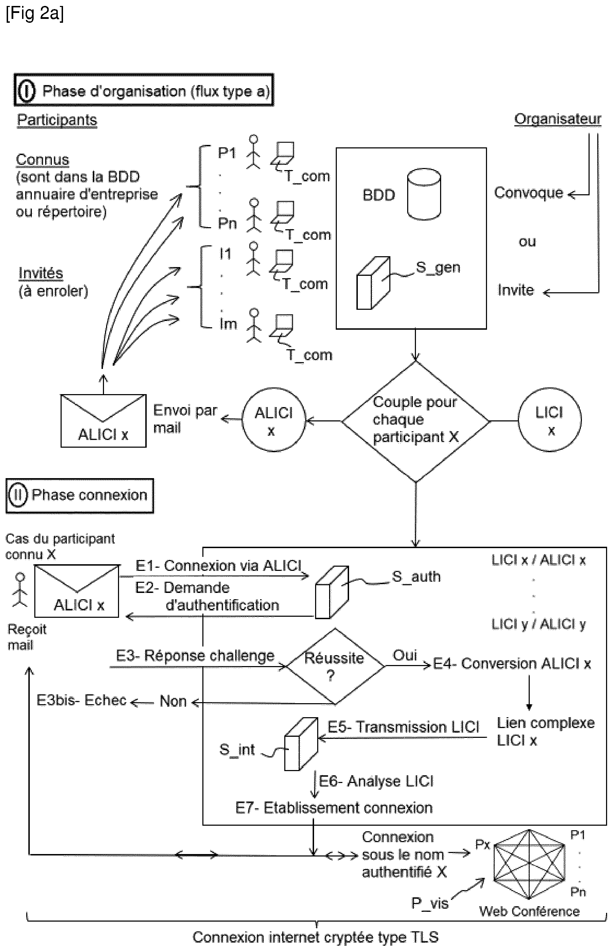

Comme cela est illustré par la figure 2a, le procédé est mis en œuvre par un système informatique comportant notamment un serveur de génération de liens d'invitation S_gen associé à une base de données BDD, un serveur d'authentification S_auth, un serveur d'interconnexion S_int, et une plateforme de visio-conférence P_vis. Le serveur d'authentification S_auth et le serveur d'interconnexion S_int peuvent être installés conjointement ou séparément mais alors reliés par une relation de confiance de type partenaire de confiance ("Relying party" en anglais). Le serveur d'interconnexion S_int se repose alors sur le serveur d'authentification S_auth pour effectuer l'authentification des participants P1-Pn, I1-Im. Autrement dit, l'opération d'authentification est sous-traitée au serveur d'authentification S_auth par le serveur d'interconnexion S_int. La base de données BDD pourra contenir un répertoire utilisé pour définir une liste de participants à une réunion, comme cela est expliqué plus en détails ci-après.

La plateforme de visio-conférence P_vis est de préférence installée sur un serveur distinct du serveur d'authentification S_auth et du serveur d'interconnexion S_int.

Les participants P1-Pn, I1-Im souhaitant se connecter à une réunion comportent à cet effet un terminal de communication T_com. Le terminal de communication T_com du participant P1-Pn, I1-Im pourra prendre la forme d'un navigateur ou de tout autre programme adapté ("user agent" en anglais) exécuté par un ordinateur ou un téléphone mobile, notamment de type smartphone, comportant des moyens de communication audio et vidéo.

On décrit ci-après les différentes étapes mises en œuvre par le procédé selon l'invention comportant une phase d'organisation et une phase de connexion.

Suivant la phase d'organisation, le serveur de génération de liens d'invitation S_gen génère, pour chaque participant P1-Pn, I1-Im à la réunion, un lien d'invitation complexe individuel LICI vers la réunion. Le lien d'invitation complexe individuel LICI prend la forme d'un jeton (ou "token" en anglais), de type JSON Web Token tel que défini par un rfc de l'IETF, notamment le rfc7519, dont une charge utile ("payload" en anglais) contient des informations relatives aux caractéristiques et le cas échéant aux paramètres de contexte de la réunion ainsi que des informations relatives à l'identité de chaque participant P1-Pn, I1-Im auquel est destiné ledit lien d'invitation complexe individuel LICI. Un jeton est généré de façon à garantir l'intégrité des données contenues dans son entête ("header" en anglais) et dans sa charge utile, le tout étant signé numériquement avec une fonction de hashage choisie pour assurer un haut niveau de sécurité de l'encodage et dont la clé secrète est conservée sur le serveur d'interconnexion S_int ou, le cas échéant, sur le serveur d'authentification S_auth distinct du serveur d'interconnexion S_int. La fonction de hashage est de type SHA ou ECDSA.

Le serveur de génération de liens d'invitation S_gen génère, à partir de ces liens d'invitation complexe individuels, un alias de chaque lien d'invitation complexe individuel ALICI lequel alias est le produit d'une fonction de hashage apte à générer une empreinte numérique à partir du lien d'invitation complexe individuel LICI, notamment sous forme d'une chaîne de caractères UTF-8. L'empreinte numérique est unique pour chaque lien d'invitation complexe individuel LICI, conformément aux caractéristiques de la fonction de hashage et n'offre aucune possibilité de reconstituer le lien complexe original sans disposer d'une clé privée conservée de manière sécurisée sur le serveur d'interconnexion S_int ou le cas échéant, le serveur d'authentification S_auth.

Le serveur de génération de liens d'invitation S_gen envoie, par mail, chaque alias de lien d'invitation complexe ALICI au participant P1-Pn, I1-Im correspondant sous forme d'un lien hypertexte court.

Le serveur de génération de liens d'invitation S_gen envoie en outre vers le serveur d'interconnexion S_int ou le cas échéant vers le serveur d'authentification S_auth, un mécanisme de correspondance entre les alias des liens d'invitation complexes ALICI et les liens d'invitation complexes individuels LICI. Le mécanisme de correspondance pourra prendre la forme d'une table ou le cas échéant d'éléments cryptographiques sécurisés permettant d'assurer cette correspondance. Alternativement ou en complément, le mécanisme de correspondance est sauvegardé dans un espace de stockage dédié.

On décrit ci-après les différentes étapes de la phase de connexion. Dans une étape E1, le participant P1-Pn, I1-Im en possession du lien hypertexte court l'utilise pour se connecter à un domaine correspondant, qui est un domaine hébergeant le serveur d'authentification S_auth dans le cadre d'un flux de connexion a) ou le cas échéant le serveur d'interconnexion S_int qui utilise le serveur d'authentification S_auth comme partenaire de confiance ("Relying Party" en anglais) dans le cas d'un flux de connexion b).

Dans le flux de connexion a), le serveur d'authentification S_auth requiert, dans une étape E2, du participant P1-Pn, I1-Im qui se connecte une authentification forte selon un procédé défini par le standard du W3C WebAuthn ou tout autre procédé équivalent, un déroulement de ladite authentification (cf. étape E3) étant immédiat dans le cas d'une personne connue ou bien qui passera par une phase d'enrôlement dans le cas d'une personne invitée.

En effet, pour les participants P1-Pn connus, il a été possible de réaliser un premier challenge d'enregistrement qui sera reproduit pour les authentifications fortes futures. A cet effet, le serveur d'authentification S_auth met en œuvre une étape préalable d'enregistrement d'au moins un "facteur d'authentification" choisi notamment parmi: un paramètre biométrique (empreinte digitale, reconnaissance faciale ou autre), au moins une saisie d'un code d'identification, une détection du terminal possédé par le participant P1-Pn, une utilisation de clés d'authentification par exemple de type Yubikey, ou autre.

Le serveur d'authentification S_auth met ensuite en œuvre une étape de vérification ultérieure du facteur d'authentification suite à la demande d'authentification du participant P1-Pn. Avantageusement, l'authentification du participant P1-Pn est effectuée en utilisant le standard FIDO2/WebAuthn.

Alternativement, pour effectuer une authentification d'un participant I1-Im de type "invité", le serveur d'authentification S_auth met en œuvre une étape d'envoi d'un code, typiquement un code à usage unique d'au moins quatre caractères, vers une adresse email ou un numéro de téléphone mobile du participant. Le participant P1-Pn, I1-Im pourra ensuite reproduire le code dans une fenêtre dédiée, lequel pourra être vérifié par le serveur d'authentification S_auth.

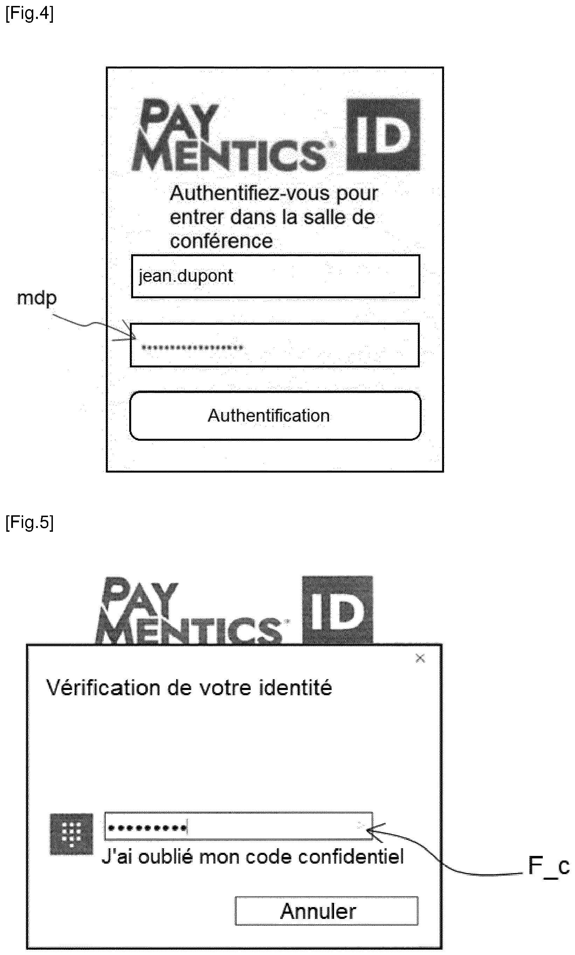

Dans un exemple de mise en œuvre, un participant souhaitant accéder à une réunion doit dans un premier temps entrer un mot de passe mdp, tel que cela est illustré par la figure 4. Ensuite, afin de vérifier l'identité du participant, un code est envoyé au participant qui doit le reproduire dans une fenêtre F_c, tel que cela est illustré par la figure 5.

Si l'authentification forte échoue (cf. étape E3bis), le processus d'interconnexion s'interrompt, le cas échéant dans des conditions qui permettent d'empêcher la multiplication des tentatives d'attaque de type "force brute".

Si l'authentification est réussie, le serveur d'authentification S_auth transmet au serveur d'interconnexion S_int l'alias de lien d'invitation complexe individuel ALICI reçu. L'alias de lien d'invitation complexe individuel ALICI reçu est alors converti en lien d'invitation complexe individuel LICI correspondant dans les étapes E4 et E5. Ce dernier lien permet au serveur d'interconnexion S_int d'introduire l'utilisateur qui a réussi le challenge d'authentification forte, déclenchant ainsi l'utilisation du jeton contenant et révélant, dans une étape E6, les caractéristiques de la réunion et le cas échéant les paramètres de contexte, pour initier la connexion du participant authentifié P1-Pn, I1-Im.

Dans une étape E7, on connecte le participant authentifié P1-Pn, I1-Im à la visio-conférence. Cette connexion est opérée au travers des protocoles internet standard, notamment de type UDP et/ou TURN, ou de tout autre protocole internet de connexion avec le navigateur du participant P1-Pn, I1-Im ainsi authentifié équivalent, s'effectuant conformément aux informations du lien d'invitation complexe individuel LICl, notamment l'identité de la personne correspondante, transmis au serveur d'interconnexion S_int à l'issue de l'étape d'authentification forte, laquelle est la condition absolument nécessaire de la lecture des informations du lien d'invitation complexe individuel LICI.

Le participant P1-Pn, I1-Im peut alors utiliser son terminal pour participer à la visio-conférence au travers d'une couche de transport réseau sécurisée (TLS) ou de tout autre protocole équivalent assurant la transmission vers et depuis la plateforme de visio-conférence P_vis opérant selon un standard, tel qu'un standard de type WebRTC ou tout autre procédé équivalent.

Le participant P1-Pn, I1-Im a ainsi accès à la réunion avec un nom donné, lequel est, de manière inaltérable et infalsifiable, le nom particulier du participant P1-Pn, I1-Im, associé par l'organisateur à l'invitation particulière et donc au lien d'invitation complexe individuel LICI correspondant.

Dans le flux de connexion b), le procédé est identique sauf que le serveur d'interconnexion S_int sollicite le serveur d'authentification S_auth à l'égard de qui il est partenaire de confiance, lequel serveur d'authentification S_auth requiert du participant P1-Pn, I1-Im qui se connecte une authentification forte selon un procédé utilisant le standard WebAuthn du W3C ou tout autre procédé équivalent, un déroulement de ladite authentification étant immédiat dans le cas d'un lien de convocation et dont le déroulement sera immédiat dans le cas d'une personne connue ou bien qui passera par une phase d'enrôlement dans le cas d'une personne invitée.

Lorsque l'authentification est réussie, le serveur d'authentification S_auth transmet au serveur d'interconnexion S_int une information que l'authentification forte a bien été accomplie et que l'alias de lien d'invitation complexe individuel ALICI peut être traité, ledit alias de lien d'invitation complexe individuel ALICI étant alors converti en lien d'invitation complexe individuel LICI correspondant. Ce dernier lien permet au serveur d'interconnexion S_int d'introduire l'utilisateur qui a réussi le challenge d'authentification forte, déclenchant ainsi l'utilisation du jeton, contenant et révélant les caractéristiques de la réunion et le cas échéant les paramètres de contexte, pour initier la connexion du participant authentifié P1-Pn, I1-Im.

La figure 2b illustre le cas où le serveur S_gen de génération de liens d'invitation associé à la base de données BDD ainsi que le serveur d'interconnexion S_int sont hébergés chez un organisateur, tandis que le serveur d'authentification S_auth est hébergé chez un partenaire de confiance.

Dans une étape E1', le terminal T_com du participant P1 se connecte au serveur S_gen de génération de liens invitation via un alias de lien d'invitation complexe individuel ALICI. Dans une étape E1bis', Le serveur S_gen de génération de liens d'invitation transmet l'alias ALICI au serveur d'authentification S_auth Le serveur d'authentification S_auth effectue une demande d'authentification au participant P1-Pn dans une étape E2'. Le participant P1-Pn répond au challenge d'identification dans une étape E3'.

Dans une étape E4', le serveur d'authentification S_auth envoie une information relative à la réussite ou à l'échec du challenge d'authentification. En cas d'échec, le processus est interrompu. Dans le cas où l'authentification a réussi, l'alias de lien d'invitation complexe individuel ALICI est converti en lien d'invitation complexe individuel LICI correspondant. Ce lien permet au serveur d'interconnexion S_int d'introduire l'utilisateur qui a réussi le challenge d'authentification forte, déclenchant déclenchant ainsi l'utilisation du jeton pour initier la connexion du participant authentifié P1-Pn, I1-Im.

En outre, étant donné que le procédé définit des paramètres de réunion, une liste de participants P1-Pn, I1-Im ainsi qu'une politique de sécurité, il sera possible de vérifier que la réunion ne voit pas se connecter plusieurs personnes ayant le même nom sous des adresses différentes, ou des invités dont la connexion n'a pas été sécurisée ou toute autre anomalie ou incohérence. La définition du périmètre de la réunion par l'ensemble de ces paramètres réunit les conditions nécessaires et suffisantes pour que des programmes de contrôle puissent vérifier le bon déroulement de la réunion tel que l'organisateur l'avait prévu.

Bien entendu, les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

En outre, l'invention n'est pas limitée aux modes de réalisation décrits précédemment et fournis uniquement à titre d'exemple mais est définie par la revendication indépendante 1. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association dès lors qu'elles restent sous la portée définie par la revendication indépendante 1.

## Revendications

1. Procédé de connexion sécurisé à une plateforme de visio-conférence (P_vis) entre plusieurs participants (P1-Pn, I1-Im) garantissant l'identité des participants par authentification forte **caractérisé en ce qu'**il est articulé autour de deux phases: l'une d'organisation, l'autre de connexion:
• la phase d'organisation comportant:
- une étape de définition de caractéristiques d'une réunion, tels qu'un horaire de début et de fin, une salle virtuelle de réunion, un thème ou un agenda, et le cas échéant des paramètres de contexte, comme par exemple le fuseau horaire, la langue d'échange, les documents support, les conditions légales applicables à la réunion,
- une étape de définition d'une liste de participants dont les identités sont prédéfinies, soit par référence à un répertoire existant dans le cas d'une convocation pour un participant connu (P1-Pn) soit par initiation d'un processus d'association dans ce répertoire d'une personne nouvelle connue par divers moyens tels que son adresse mail ou son téléphone (enrôlement), soit en prévoyant une étape d'authentification forte préalable à l'interconnexion, par tout procédé géré par un serveur d'authentification à cet effet, comme un mot de passe à usage unique, pour des personnes qui n'ont pas vocation à être enregistrées dans ce répertoire (invitation) pour un participant de type invité (11-Im),
- une étape de génération, pour chaque participant (P1-Pn, I1-Im) à la réunion, d'un lien d'invitation complexe individuel (LICI) vers la réunion, ledit lien d'invitation complexe individuel (LICI) prenant la forme d'un jeton JSON Web Token dont une charge utile contient des informations relatives aux caractéristiques et le cas échéant aux paramètres de contexte de la réunion ainsi que des informations relatives à l'identité de chaque participant (P1-Pn, I1-Im) auquel est destiné ledit lien d'invitation complexe individuel (LICI), le jeton étant généré de façon à garantir l'intégrité des données contenues dans son entête et dans sa charge utile, le tout étant signé numériquement avec une fonction de hashage choisie pour assurer un haut niveau de sécurité de l'encodage et dont une clé secrète est conservée sur un serveur d'interconnexion (S_int) ou, le cas échéant, sur un serveur d'authentification (S_auth) distinct du serveur d'interconnexion (S_int),
- une étape de génération à partir de ces liens d'invitation complexe individuels, d'un alias de chaque lien d'invitation complexe individuel (ALICI) lequel alias est le produit d'une fonction de hashage apte à générer une empreinte numérique à partir du lien d'invitation complexe individuel (LICI), ladite empreinte numérique étant unique pour chaque lien d'invitation complexe individuel (LICI), conformément aux caractéristiques de la fonction de hashage et n'offrant aucune possibilité de reconstituer le lien complexe original sans disposer d'une clé privée conservée de manière sécurisée sur le serveur d'interconnexion (S_int) ou le cas échéant, le serveur d'authentification (S_auth),
- une étape d'envoi, par mail, de chaque alias de lien d'invitation complexe individuel (ALICI) au participant (P1-Pn, I1-Im) correspondant sous forme d'un lien hypertexte court,
- une étape de sauvegarde ou d'envoi vers le serveur d'interconnexion (S_int) ou le cas échéant vers le serveur d'authentification (S_auth), d'un mécanisme de correspondance entre les alias des liens d'invitation complexes (ALICI) et les liens d'invitation complexes individuels (LICI),
• puis la phase de connexion comportant:
- une étape dans laquelle le participant (P1-Pn, I1-Im) en possession du lien court l'utilise pour se connecter à un domaine correspondant, qui est un domaine hébergeant un serveur d'authentification (S_auth) dans le cadre d'un flux de connexion a) ou le cas échéant un serveur d'interconnexion (S_int) qui utilise le serveur d'authentification (S_auth) comme un partenaire de confiance dans le cas d'un flux de connexion b),
- dans le flux de connexion a), une étape dans laquelle le serveur d'authentification (S_auth) requiert du participant (P1-Pn, I1-Im) qui se connecte une authentification forte selon un procédé de type standard, un déroulement de ladite authentification étant immédiat dans le cas d'une personne connue ou bien qui passera par une phase d'enrôlement ou d'identification par authentification forte gérée par le serveur d'authentification, par tout procédé disponible comme l'usage d'un mot de passe à usage unique, dans le cas d'une personne invitée,
- dans le flux de connexion b), une étape dans laquelle le serveur d'interconnexion (S_int) sollicite le serveur d'authentification (S_auth) à l'égard de qui il est partenaire de confiance, lequel serveur d'authentification (S_auth) requiert du participant (P1-Pn, I1-Im) qui se connecte une authentification forte selon un procédé de type standard, un déroulement de ladite authentification étant immédiat dans le cas d'un lien de convocation et dont le déroulement sera immédiat dans le cas d'une personne connue ou bien qui passera par une phase d'enrôlement ou d'identification par authentification forte gérée par le serveur d'authentification forte, par tout procédé disponible comme l'usage d'un mot de passe à usage unique, dans le cas d'une personne invitée,
- une étape dans laquelle, si l'authentification forte échoue, le processus d'interconnexion s'interrompt, et si l'authentification est réussie, le serveur d'authentification (S_auth) transmet au serveur d'interconnexion (S_int) l'alias de lien d'invitation complexe individuel (ALICI) reçu dans le cas du flux de connexion flux a) ou bien, dans le cas du flux de connexion b) une information que l'authentification forte a bien été accomplie et que l'alias de lien d'invitation complexe individuel (ALICI) peut être traité, ledit alias de lien d'invitation complexe individuel (ALICI) reçu par l'un ou l'autre flux a) ou b) étant alors converti en lien d'invitation complexe individuel (LICI) correspondant et ce dernier lien permettant au serveur d'interconnexion (S_int) d'introduire l'utilisateur qui a réussi le challenge d'authentification forte, déclenchant ainsi l'utilisation du jeton, contenant et révélant les caractéristiques de la réunion et le cas échéant les paramètres de contexte, pour initier la connexion du participant authentifié (P1-Pn, I1-Im),
- une étape de connexion du participant authentifié (P1-Pn, I1-Im) à la visio-conférence s'effectuant conformément aux informations du lien d'invitation complexe individuel (LICI), notamment l'identité de la personne correspondante, transmis au serveur d'interconnexion (S_int) à l'issue de l'étape d'authentification forte, laquelle est une condition absolument nécessaire de la lecture des informations du lien d'invitation complexe individuel (LICI),
- une étape d'utilisation du terminal du participant (P1-Pn, I1-Im) pour participer à la visio-conférence au travers d'une couche de transport réseau sécurisée assurant une transmission d'information vers et depuis une plateforme de visio-conférence P_vis.

2. Procédé selon la revendication 1, **caractérisé en ce que** l'empreinte numérique prend notamment la forme d'une chaîne de caractères UTF-8.

3. Procédé selon la revendication 1 ou 2, **caractérisé en ce que** le mécanisme de correspondance entre les alias des liens d'invitation complexes ALICI et les liens d'invitation complexes individuels LICl prend la forme d'une table ou le cas échéant d'éléments cryptographiques sécurisés permettant d'assurer cette correspondance.

4. Procédé selon l'une quelconque des revendications 1 à 3, **caractérisé en ce que** la fonction de hashage est de type SHA ou de type ECDSA.

5. Procédé selon l'une quelconque des revendications 1 à 4, **caractérisé en ce que** le serveur d'authentification (S_auth) requiert du participant (P1-Pn, I1-Im) qui se connecte une authentification forte selon un procédé défini par le standard du W3C WebAuthn, ou tout autre procédé équivalent.

6. Procédé selon l'une quelconque des revendications 1 à 5, **caractérisé en ce que** la connexion du participant authentifié (P1-Pn, I1-Im) à la visio-conférence est opérée au travers de protocoles internet standard de type UDP et/ou TURN.

7. Procédé selon l'une quelconque des revendications 1 à 6, **caractérisé en ce que** la couche de transport réseau sécurisée est un protocole de type TLS.

8. Procédé selon l'une quelconque des revendications 1 à 7, **caractérisé en ce que** le terminal du participant (P1-Pn, I1-Im) communique avec la plateforme de visio-conférence (P_vis) opérant selon un standard, tel qu'un standard de type WebRTC.

9. Procédé selon l'une quelconque des revendications 1 à 8, **caractérisé en ce qu'**il comporte une étape d'utilisation d'une interface logicielle (10) pour la définition des paramètres de la réunion.

10. Procédé selon la revendication 9, **caractérisé en ce que** l'interface logicielle (10) met en œuvre des boutons (B1, B2) de génération et d'envoi de liens courts d'invitation à destination des différents participants (P1-Pn, I1-Im).

11. Procédé selon l'une quelconque des revendications 1 à 10, **caractérisé en ce qu'**il comporte une étape de désignation d'un ou plusieurs modérateurs ayant la possibilité de contrôler des droits pour les différents participants (P1-Pn, I1-Im), tels que le droit de parler ou le droit de partager un document ou d'enregistrer la conférence ou bien au contraire d'en interdire l'enregistrement.

12. Procédé selon l'une quelconque des revendications 1 à 11, **caractérisé en ce que** la sélection des participants (P1-Pn, I1-Im) et/ou une sélection d'un nom de salle (R) est effectuée au moyen d'une liste déroulante (Ld).

## Patentansprüche

1. Verfahren zur sicheren Verbindung mit einer Videokonferenzplattform (P_vis) zwischen mehreren Teilnehmern (P1-Pn, I1-Im), wobei dieses Verfahren die Identität der Teilnehmer durch eine starke Authentifizierung garantiert, **dadurch gekennzeichnet, dass** es aus zwei Phasen besteht: eine Organisationsphase und eine Verbindungsphase: wobei
• die Organisationsphase, umfassend:
- einen Schritt zum Definieren der Merkmale einer Besprechung, wie etwa einer Anfangs- und Endzeit, eines virtuellen Besprechungsraums, eines Themas oder einer Tagesordnung, und gegebenenfalls von Kontextparametern, wie etwa der Zeitzone, der Arbeitssprache, der Dokumentationshilfen und der für die Besprechung geltenden rechtlichen Bedingungen,
- einen Schritt zum Definieren einer Liste von Teilnehmern, deren Identitäten vordefiniert sind, entweder durch Bezugnahme auf ein vorhandenes Verzeichnis im Falle einer Benachrichtigung für einen bekannten Teilnehmer (P1-Pn) oder durch Initiieren eines Assoziierungsprozesses in diesem Verzeichnis für eine neue bekannte Person über verschiedene Mittel, beispielsweise ihre E-Mail-Adresse oder Telefonnummer (Anmeldung), oder durch Bereitstellung eines starken Authentifizierungsschritts vor der Zusammenschaltung durch einen beliebigen Prozess, der zu diesem Zweck von einem Authentifizierungsserver verwaltet wird, beispielsweise ein Einmalkennwort, für diejenigen Personen, die nicht in diesem Verzeichnis (Einladung) für einen Teilnehmer von Gast-Typ (I1-Im) registriert werden sollen,
- einen Schritt zum Generieren eines individuellen komplexen Einladungslinks (LICI) zur Besprechung für jeden Teilnehmer (P1-Pn, I1-Im), wobei der individuelle komplexe Einladungslink (LICI) die Form eines JSON Web Token hat, dessen Nutzlast Informationen über die Merkmale und gegebenenfalls die Kontextparameter der Besprechung sowie Informationen über die Identität jedes Teilnehmers (P1-Pn, I1-Im) enthält, für den der individuelle komplexe Einladungslink (LICI) bestimmt ist, wobei der Token so generiert wird, dass die Integrität der in seinem Header und seiner Nutzlast enthaltenen Daten gewährleistet ist, wobei das Ganze digital mit einer Hash-Funktion signiert wird, die so gewählt ist, dass ein hohes Maß an Verschlüsselungssicherheit gewährleistet ist, und dessen geheimer Schlüssel auf einem Verbindungsserver (S_int) oder gegebenenfalls auf einem vom Verbindungsserver (S_int) getrennten Authentifizierungsserver (S_auth) gespeichert wird,
- einen Schritt zum Generieren eines Alias für jeden einzelnen komplexen Einladungslink (ALICI) aus diesen einzelnen komplexen Einladungslinks, wobei der Alias das Produkt einer Hash-Funktion ist, die in der Lage ist, aus dem einzelnen komplexen Einladungslink (LICI) einen digitalen Fingerabdruck zu erzeugen, wobei der digitale Fingerabdruck für jeden einzelnen komplexen Einladungslink (LICI) entsprechend den Eigenschaften der Hash-Funktion eindeutig ist und ohne die Möglichkeit, den ursprünglichen komplexen Link ohne einen privaten Schlüssel wiederherzustellen, der sicher auf dem Verbindungsserver (S_int) oder gegebenenfalls auf dem Authentifizierungsserver (S_auth) gespeichert ist,
- einen Schritt zum Senden jedes einzelnen komplexen Einladungslink-Alias (ALICI) per E-Mail an den entsprechenden Teilnehmer (P1-Pn, I1-Im) in Form eines kurzen Hyperlinks,
- einen Schritt zum Speichern oder Senden eines Korrespondenzmechanismus zwischen den komplexen Einladungslink-Alias (ALICI) und den einzelnen komplexen Einladungslinks (LICI) an den Verbindungsserver (S_int) oder gegebenenfalls an den Authentifizierungsserver (S_auth),
• dann die Verbindungsphase, umfassend:
- einen Schritt, in dem der Teilnehmer (P1-Pn, I1-Im) mit einem Kurzlink diesen nutzt, um sich mit einer entsprechenden Domäne zu verbinden, bei der es sich im Rahmen eines Verbindungsablaufs a) um eine Domäne handelt, die einen Authentifizierungsserver (S_auth) hostet, oder gegebenenfalls um einen Verbindungsserver (S_int), der im Falle eines Verbindungsablaufs b) den Authentifizierungsserver (S_auth) als vertrauenswürdigen Partner nutzt,
- im Verbindungsablauf a) einen Schritt, in dem der Authentifizierungsserver (S_auth) vom Verbindungsteilnehmer (P1-Pn, I1-Im) eine starke Authentifizierung gemäß einem Standardverfahren verlangt, wobei die Authentifizierung im Fall einer bekannten Person sofort erfolgt oder im Fall einer eingeladenen Person mithilfe einer starken, vom Authentifizierungsserver verwalteten Authentifizierung über ein beliebiges verfügbares Verfahren, wie beispielsweise die Verwendung eines Einmalkennworts, eine Anmelde- oder Identifizierungsphase durchläuft,
- im Verbindungsablauf b) einen Schritt, in dem der Verbindungsserver (S_int) von dem Authentifizierungsserver (S_auth), für den er ein vertrauenswürdiger Partner ist, eine starke Authentifizierung verlangt, wobei der Authentifizierungsserver (S_auth) von dem Verbindungsteilnehmer (P1-Pn, I1-Im) eine starke Authentifizierung gemäß einem Standardverfahren verlangt, wobei diese Authentifizierung im Fall eines Benachrichtigungslinks sofort erfolgt und im Fall einer bekannten Person sofort erfolgt oder im Fall einer eingeladenen Person eine Anmelde- oder Identifizierungsphase mit Hilfe einer starken Authentifizierung durchläuft, die vom Starkauthentifizierungsserver verwaltet wird, und zwar durch ein beliebiges verfügbares Verfahren, wie beispielsweise die Verwendung eines Einmalkennworts,
- einen Schritt, in dem, wenn die starke Authentifizierung fehlschlägt, der Verbindungsprozess unterbrochen wird, und wenn die Authentifizierung erfolgreich ist, der Authentifizierungsserver (S_auth) an den Verbindungsserver (S_int) den im Falle des Verbindungsflusses a) empfangenen individuellen komplexen Einladungslink-Alias (ALICI) oder im Falle des Verbindungsflusses b) eine Meldung überträgt, dass die starke Authentifizierung erfolgreich abgeschlossen wurde und der individuelle komplexe Einladungslink-Alias (ALICI) verarbeitet werden kann, wobei der entweder im Fluss a) oder b) empfangene individuelle komplexe Einladungslink-Alias (ALICI) dann in den entsprechenden individuellen komplexen Einladungslink (LICI) umgewandelt wird und dieser Link es dem Verbindungsserver (S_int) ermöglicht, den Benutzer vorzustellen, der den Test der starken Authentifizierung erfolgreich bestanden hat, wodurch die Verwendung des Tokens ausgelöst wird, das die Merkmale der Besprechung und gegebenenfalls die Kontextparameter enthält und offenlegt, um die Verbindung des authentifizierten Teilnehmers (P1-Pn, I1-Im) einzuleiten,
- einen Schritt des Verbindens des authentifizierten Teilnehmers (P1-Pn, I1-Im) mit der Videokonferenz gemäß den Informationen des individuellen komplexen Einladungslinks (LICI), insbesondere der Identität der entsprechenden Person, die am Ende des starken Authentifizierungsschritts an den Verbindungsserver (S_int) übertragen werden, was eine unbedingt notwendige Voraussetzung für das Lesen der Informationen im individuellen komplexen Einladungslink (LICI) ist,
- einen Schritt der Verwendung des Endgeräts des Teilnehmers (P1-Pn, I1-Im), um an der Videokonferenz über eine sichere Netzwerktransportschicht teilzunehmen, die eine Übertragung von Informationen zu und von einer Videokonferenzplattform P_vis gewährleistet.

2. Verfahren nach Anspruch 1, **dadurch gekennzeichnet, dass** der digitale Fingerabdruck insbesondere die Form einer UTF-8-Zeichenfolge aufweist.

3. Verfahren nach Anspruch 1 oder 2, **dadurch gekennzeichnet, dass** die Korrespondenzmechanismen zwischen den Alias der komplexen Einladungslinks ALICI und den einzelnen komplexen Einladungslinks LICI als Tabellen oder gegebenenfalls sicheren kryptografischen Elementen aufweisen, die es ermöglichen, diese Korrespondenz sicherzustellen.

4. Verfahren nach einem der Ansprüche 1 bis 3, **dadurch gekennzeichnet, dass** die Hash-Funktion als SHA-Typ oder ECDSA-Typ aufweist.

5. Verfahren nach einem der Ansprüche 1 bis 4, **dadurch gekennzeichnet, dass** der Authentifizierungsserver (S_auth) vom Verbindungsteilnehmer (P1-Pn, I1-Im) eine starke Authentifizierung gemäß einem durch den W3C-WebAuthn-Standard definierten Verfahren oder einem anderen gleichwertigen Verfahren verlangt.

6. Verfahren nach einem der Ansprüche 1 bis 5, **dadurch gekennzeichnet, dass** die Anbindung des authentifizierten Teilnehmers (P1-Pn, I1-Im) an die Videokonferenz über Standard-Internetprotokolle vom UDP- und/oder TURN-Typ erfolgt.

7. Verfahren nach einem der Ansprüche 1 bis 6, **dadurch gekennzeichnet, dass** die sichere Netzwerktransportschicht ein Protokoll von TLS-Typ ist.

8. Verfahren nach einem der Ansprüche 1 bis 7, **dadurch gekennzeichnet, dass** das Endgerät des Teilnehmers (P1-Pn, I1-Im) mit der Videokonferenzplattform (P_vis) kommuniziert, die nach einem Standard, beispielsweise einem WebRTC-ähnlichen Standard, arbeitet.

9. Verfahren nach einem der Ansprüche 1 bis 8, **dadurch gekennzeichnet, dass** es einen Schritt zum Verwenden einer Softwareschnittstelle (10) zum Definieren der Parameter der Besprechung umfasst.

10. Verfahren nach Anspruch 9, **dadurch gekennzeichnet, dass** die Softwareschnittstelle (10) Schaltflächen (B1, B2) zum Generieren und Senden von kurzen Einladungslinks an die verschiedenen Teilnehmer (P1-Pn, I1-Im) implementiert.

11. Verfahren nach einem der Ansprüche 1 bis 10, **dadurch gekennzeichnet, dass** es einen Schritt zum Bestimmen eines oder mehrerer Moderatoren umfasst, die in der Lage sind, die Rechte der verschiedenen Teilnehmer (P1-Pn, I1-Im) zu kontrollieren, wie etwa das Rederecht oder das Recht, ein Dokument freizugeben oder die Konferenz aufzuzeichnen bzw. im Gegenteil die Aufzeichnung derselben zu verbieten.

12. Verfahren nach einem der Ansprüche 1 bis 11, **dadurch gekennzeichnet, dass** die Auswahl der Teilnehmer (P1-Pn, I1-Im) und/oder die Auswahl eines Raumnamens (R) mit Hilfe einer Dropdown-Liste (Ld) erfolgt.

## Claims

1. A method for a secure connection to a videoconference platform (P_vis) between several participants (P1-Pn, I1-Im), said method guaranteeing the identities of the participants through a strong authentication, **characterized in that** it is structured around two phases: an organization phase and a connection phase:
• the organization phase comprising:
- a step of defining the characteristics of a meeting, such as a start and end time, a virtual meeting room, a theme or an agenda, and if necessary context parameters, such as for example the time zone, the working language, the documentary aids, the legal conditions applicable to the meeting,
- a step of defining a list of participants whose identities are predefined, either by reference to an existing directory in the case of a notification for a known participant (P1-Pn) or by initiating an association process in this directory for a new known person through various means such as her/his mail address or telephone number (signing up), or by providing a strong authentication step prior to interconnection, through any process managed by an authentication server for this purpose, such as a single-use password, for those persons who are not intended to be registered in this directory (invitation) for a guest-type participant (I1-Im),
- a step of generating, for each participant (P1-Pn, 11-Im) in the meeting, an individual complex invitation link (LICI) to the meeting, said individual complex invitation link (LICI) taking the form of a JSON Web Token, a payload of which contains information about the characteristics and, if need be, the context parameters of the meeting as well as information about the identity of each participant (P1-Pn, I1-Im) whom said individual complex invitation link (LICI) is provide for, the token being generated so as to guarantee the integrity of the data contained in its header and in its payload, the whole being digitally signed with a hash function which is chosen so as to ensure a high level of encoding security and a secret key of which is kept on an interconnection server (S_int) or, if need be, on an authentication server (S_auth) separate from the interconnection server (S_int),
- a step of generating from these individual complex invitation links an alias for each individual complex invitation link (ALICI), which alias is the product of a hash function capable of generating a digital fingerprint from the individual complex invitation link (LICI), said digital fingerprint being unique for each individual complex invitation link (LICI), in accordance with the characteristics of the hash function and with no possibility of reconstituting the original complex link without any private key securely stored on the interconnection server (S_int) or, if need be, the authentication server (S_auth),
- a step of sending through an email each individual complex invitation link alias (ALICI) to the corresponding participant (P1-Pn, I1-Im) in the form of a short hyperlink,
- a step of saving or sending to the interconnection server (S_int) or, if need be, to the authentication server (S_auth), a correspondence mechanism between the aliases of the complex invitation links (ALICI) and the individual complex invitation links (LICI),
• then the connection phase comprising:
- a step in which the participant (P1-Pn, I1-Im) with a the short link uses this one to connect to a corresponding domain, which is a domain hosting an authentication server (S_auth) in the context of a connection flow a) or, if need be, an interconnection server (S_int) which uses the authentication server (S_auth) as a trusted partner in the case of a connection flow b),
- in the connection flow a), a step in which the authentication server (S_auth) requires from the connecting participant (P1-Pn, I1-Im) a strong authentication according to a standard type process, a progress of said authentication being immediate in the case of a known person or passing through a signing-up or identification phase with the help of a strong authentication managed by the authentication server, through any available process such as the use of a single-use password, in the case of an invited person,
- in the connection flow b), a step in which the interconnection server (S_int) requires from the authentication server (S_auth) to which it is a trusted partner, which authentication server (S_auth) requires from the connecting participant (P1-Pn, I1-Im) a strong authentication according to a standard type process, a progress of said authentication being immediate in the case of a notification link and said progress being immediate in the case of a known person or passing through a signing-up or identification phase with the help of a strong authentication managed by the strong authentication server, through any available process such as the use of a single-use password, in the case of an invited person,
- a step in which, if the strong authentication fails, the interconnection process is interrupted, and if the authentication is successful, the authentication server (S_auth) transmits to the interconnection server (S_int) the individual complex invitation link alias (ALICI) received in the case of the connection flow a) or, in the case of the connection flow b), a statement that the strong authentication has been successfully completed and that the individual complex invitation link alias (ALICI) can be processed, said individual complex invitation link alias (ALICI) received by either flow a) or b) then being converted into the corresponding individual complex invitation link (LICI) and this link allowing the interconnection server (S_int) to introduce the user who has successfully passed the strong authentication test, triggering thereby the use of the token, containing and revealing the characteristics of the meeting and, if need be, the context parameters, in order to initiate the connection of the authenticated participant (P1-Pn, I1-Im),
- a step of connecting the authenticated participant (P1-Pn, I1-Im) to the videoconference in accordance with the information of the individual complex invitation link (LICI), in particular the identity of the corresponding person, transmitted to the interconnection server (S_int) at the end of the strong authentication step, which is an absolutely necessary condition for reading the information in the individual complex invitation link (LICI),
- a step of using the terminal of the participant (P1 -Pn, I1-Im) to participate in the videoconference through a secure network transport layer ensuring a transmission of information to and from a videoconference platform P_vis.

2. The method according to claim 1, **characterized in that** the digital fingerprint has in particular the form of a UTF-8 character string.

3. The method according to claim 1 or 2, **characterized in that** the correspondence mechanism between the aliases of the complex invitation links ALICI and the individual complex invitation links LICI have the form tables or, if need be, secure cryptographic elements making it possible to ensure this correspondence.

4. The method according to any of the claims 1 to 3, **characterized in that** the hash function is of the SHA type or of ECDSA type.

5. The method according to any of the claims 1 to 4, **characterized in that** the authentication server (S_auth) requires from the connecting participant (P1-Pn, I1-Im) a strong authentication according to a process defined by the W3C WebAuthn standard, or any other equivalent process.

6. The method according to any of the claims 1 to 5, **characterized in that** the connection of the authenticated participant (P1-Pn, I1-Im) to the videoconference is carried out via standard internet protocols of the UDP and/or TURN type.

7. The method according to any of the claims 1 to 6, **characterized in that** the secure network transport layer is a TLS-type protocol.

8. The method according to any of the claims 1 to 7, **characterized in that** the terminal of the participant (P1-Pn, I1-Im) communicates with the videoconference platform (P_vis) operating according to a standard, such as a WebRTC-type standard.

9. The method according to any of the claims 1 to 8, **characterized in that** it comprises a step of using a software interface (10) for defining the parameters of the meeting.

10. The method according to claim 9, **characterized in that** the software interface (10) implements buttons (B1, B2) for generating and sending short invitation links to the different participants (P1-Pn, I1-Im).

11. The method according to any of the claims 1 to 10, **characterized in that** it comprises a step of designating one or more moderators capable of controlling rights for the different participants (P1-Pn, I1-Im), such as the right to speak or the right to share a document or to record the conference or, on the contrary, to prohibit the recording thereof.

12. The method according to any of the claims 1 to 11, **characterized in that** the selection of participants (P1-Pn, I1-Im) and/or a selection of a room name (R) is carried out with the help of a drop-down list (Ld).
